# EUROPÄISCHE PATENTANMELDUNG

(11) **EP 2 518 353 A1**
(43) Veröffentlichungstag der Anmeldung: **31.10.2012**
(21) Anmeldenummer: 12175700.9
(22) Anmeldetag: 05.05.2009
(51) Int. Cl.: F16C 33/44, F16C 33/56, F16C 33/62

(54) **Lagermodul**

(30) Priorität: 08.05.2008 DE 102008022861; 23.09.2008 DE 102008048412
(62) Teilanmeldung aus: 09741755.4
(71) Anmelder: Schaeffler Technologies AG & Co. KG, 91074 Herzogenaurach (DE)
(72) Erfinder: Schulte-Nölle, Christian, 96052 Bamberg (DE); Beresch, Eduard, 97529 Sulzheim (DE); Müller, Claus, 90542 Eckental (DE); Hafit, Ahmed, 97422 Schweinfurt (DE)

(57) **Zusammenfassung**

Die Erfindung betrifft ein Lagermodul (70) mit einer ersten und einer zweiten Lagerkomponente (4, 5), die relativ zueinander bewegbar gelagert sind, wobei die Lagerkomponenten (4, 5) als ein sich in eine Umfangsrichtung (12) erstreckender Außenring (8) und ein entsprechender Innenring (10), ausgeführt sind, wobei an einem der beiden Lagerringe (8, 10) eine Laufbahn (73) vorgesehen ist, seitlich von der ein Korrosionsschutz (74) vorgesehen ist, und wobei das Lagermodul (70) von Wasser geschmiert ist.

## Beschreibung

### Gebiet der Erfindung

Die Erfindung betrifft ein Lagermodul mit einer ersten und einer zweiten Lagerkomponente die relativ zueinander bewegbar gelagert sind.

Bei einem Lagermodul der eingangs genannten Art handelt es sich beispielsweise um ein Linear- oder ein Rotationslager. Das Lagermodul ist dabei insbesondere für einen Einsatz vorwiegend unter Wasser vorgesehen, wobei es sich sowohl um Süß- als auch um Salzwasser handeln kann. Ein derartiges Lagermodul findet beispielsweise in Unterwasserturbinen, Unterwasserantrieben, wie z.B. Schiffsantrieben, oder bei Schiffsrudern Anwendung.

### Hintergrund der Erfindung

Es ist beispielsweise aus dem Schiffsbau bekannt, dass Schiffsbauteile, wie z.B. ein Schiffsrumpf häufig mit Unterwasserorganismen, wie z.B. Seepocken, bewachsen und überkrustet werden. Allgemein wird ein derartiges Bewachsen von Bauteilen durch Unterwasserorganismen auch als Fouling bezeichnet. Ein derartiges Fouling beeinträchtigt die Funktionsfähigkeit und die Betriebstüchtigkeit der betroffenen Bauteile mitunter erheblich.

Um einem Anwachsen von Unterwasserorganismen entgegen zu wirken, ist es beispielsweise aus der DE 699 21 166 T2 bekannt, marine Bauteile, hier nennt die DE 699 21 166 T2 beispielsweise einen Schiffsrumpf oder eine Flüssigkeitssammelröhre, mit einer Fouling-Ablösungsbeschichtung zu versehen. Dazu wird ein entsprechendes Beschichtungsmittel dem typischerweise vorbehandelten marinen Bauteil beispielsweise mittels eines Pinselauftrags oder eines Besprühens aufgebracht. Eine entsprechende Vorbehandlung des marinen Bauteils sieht beispielsweise ein Aufbringen einer Feuchtebeschichtung, eines Haftvermittlers, etc. vor. Nachteiligerweise gestaltet sich die genannte Beschichtungsprozedur entsprechend arbeits- und somit auch kostenaufwendig.

In der DE 697 29 791 T2 wird eine anwuchsverhindernde schwarze Anstrichfarbe zur Verwendung als ein anwuchsverhinderndes Mittel in Schiffsanwendungen genannt.

### Aufgabe der Erfindung

Der Erfindung liegt die Aufgabe zugrunde, ein unaufwendig zu realisierendes Lagermodul anzugeben, welches insbesondere für eine Unterwasseranwendung geeignet ist.

### Lösung der Aufgabe

Die Aufgabe wird erfindungsgemäß gelöst durch ein Lagermodul mit einer ersten und einer zweiten Lagerkomponente die relativ zueinander bewegbar gelagert sind, wobei ein separates Protektionsmittel vorgesehen ist, welches ein oligodynamisch wirkendes Material umfasst.

Die Erfindung geht von der Überlegung aus, dass ein Lagermodul, welches für eine Unterwasseranwendung vorgesehen ist, beispielsweise im Einsatz bei einer Unterwasserturbine, in zunehmendem Maße mit dem Umgebungsmedium, also Wasser, geschmiert wird. Dadurch erwächst die Problematik eines sogenannten Foulings zunehmend auch für derartige Lagermodule.

Die Erfindung erkennt, dass als in besonderem Maße problematisch für den Erhalt der Funktionsfähigkeit des Lagermoduls vor allem ein Bewuchs von Funktionsflächen des Lagermoduls mit kalkabgebenden Unterwasserorganismen erachtet werden kann. Zu den kalkabgebenden Unterwasserorganismen sind beispielsweise Seepocken zu zählen. Unter einer Funktionsfläche des Lagermoduls wird insbesondere eine Fläche verstanden, entlang welcher eine Bewegung der Lagerkomponenten zueinander erfolgt. Dies ist im Falle eines Gleitlagers insbesondere eine Gleitfläche, entlang welcher eine Gleitbewegung der Lagerkomponenten erfolgt. Im Falle eines Wälzlagers ist eine derartige Funktionsfläche insbesondere durch eine Lauffläche gegeben, entlang welcher eine Anzahl von die Lagerkomponenten lagernden Wälzkörpern läuft. Bei einem Bewuchs einer derartigen Funktionsfläche, insbesondere mit kalkabsondernden Unterwasserorganismen, ist eine Schädigung der Funktionsfläche durch die relativ harten, mitunter scharfkantigen Kalkabsonderungen im Betrieb des Lagermoduls wahrscheinlich, was letztlich die Gefahr eines Komplettausfalls des Lagermoduls in sich birgt.

Die Erfindung erkennt weiter, dass eine "Anti-Fouling-Maßnahme", welche insbesondere das Aufbringen eines Beschichtungsmittels, wie beispielsweise einer anwuchsverhindernden Anstrichfarbe oder einer Fouling-Ablösungsbeschichtung, auf die Oberfläche der Lagerkomponenten des Lagermoduls und insbesondere auf die angesprochenen Funktionsflächen vorsieht, nicht nur sehr aufwendig, sondern insbesondere im Falle der Funktionsflächen gänzlich ungeeignet erscheint. Beispielsweise muss insbesondere bei den Funktionsflächen in erhöhtem Maße mit einem abrasionsbedingten Abtragen des beispielsweise als Anstrichfarbe gegebenen Beschichtungsmittels gerechnet werden. Die Aufrechterhaltung eines Schutzes vor einem Fouling-Bewuchs kann hierbei insbesondere nur durch ein erneutes Aufbringen der Anstrichfarbe auf die entsprechenden Flächen gewährleistet werden, was sich über die Lebensdauer des Lagermoduls häufig als sehr aufwendig und kostenintensiv erweist. Zudem kann nicht ausgeschlossen werden, dass sich durch das Aufbringen eines Beschichtungsmittels beispielsweise in Form einer Anstrichfarbe die Gleiteigenschaften oder die Laufeigenschaften einer als Gleitfläche bzw. Lauffläche ausgeführten Funktionsfläche ändern, was u.U. erheblichen Einfluss auf die Funktionalität des Lagermoduls an sich nähme.

Die Erfindung geht nun einen gänzlich anderen Weg. Denn statt den Schutz vor einem Fouling-Bewuchs durch das Aufbringen eines entsprechenden Beschichtungsmittels auf jede einzelne zu schützende Fläche zu erreichen, sieht die Erfindung ein separates Protektionsmittel vor. Das Protektionsmittel umfasst hierzu ein oligodynamisch wirkendes Material. Unter einer oligodynamischen Wirkung wird im Folgenden insbesondere eine auf lebende Unterwasserorganismen, wie z.B. Viren, Bakterien, vor allem auch auf höhere Organismen wie z.B. Algen, Seepocken oder Pilze schädigende oder abtötende Wirkung verstanden. Die Wirkung lässt sich somit als biozid beschreiben. Die oligodynamische Wirkung des Materials wird insbesondere durch die Abgabe eines Wirkbestandteils des Materials erreicht. Der Wirkbestandteil, der beispielsweise als ein Salz, ein Lösungsbestandteil, als das Material selbst, beispielsweise in kolloidaler Verteilung, oder als Ionen des Materials vorliegt, wird von dem Protektionsmittel in das Umgebungsmedium Wasser abgegeben. Das insbesondere mit dem Wirkbestandteil angereicherte Wasser durchspült das Lagermodul. Die biozide Wirkung, durch welche ein Fouling-Bewuchs der Flächen des Lagermoduls verhindert wird, ist somit nicht von einem direkten Kontakt des Protektionsmittels mit der vor Fouling-Bewuchs zu schützenden Fläche abhängig. Somit ist es insgesamt möglich, ohne großen konstruktiven Aufwand, mit einem geringen Arbeitsaufwand eine wirksame Maßnahme gegen einen Fouling-Bewuchs zu realisieren, ohne die Gefahr einer Beeinflussung der Funktionalität des Lagermoduls durch eine "Anti-Fouling-Maßnahme" in Kauf nehmen zu müssen.

Für einen Schutz vor einem Fouling-Bewuchs ist es statt dessen ausreichend, das separate Protektionsmittel, welches insbesondere als ein separates Bauteil ausgeführt ist, beispielsweise einfach an einer im Wesentlichen beliebigen Stelle des Lagermoduls beispielsweise mittels einer Verschraubung, Verklebung oder Verclipsung zu befestigen. Alternativ ist es auch möglich, das Protektionsmittel einfach in einer näheren Umgebung des Lagermoduls anzuordnen. Das Protektionsmittel kann auch an einem Befestigungselement oder an einem Gehäuse des Lagermoduls angebracht werden, bzw. das Befestigungselement oder das Gehäuse selbst darstellen.

Durch die im Wesentlichen beständige Durchspülung des Lagermoduls mit dem mit dem Wirkbestandteil angereicherten Wasser ist es möglich, einen wirkungsvollen und dauerhaften Schutz gegen einen Fouling-Bewuchs der Komponenten des Lagermoduls und insbesondere dessen Funktionsflächen zu erreichen.

Das Protektionsmittel ist im Wesentlichen keiner abrasionsintensiven Beanspruchung ausgesetzt. Der von einem Protektionsmittel ausgehende Schutz vor Fouling-Bewuchs bleibt somit unter Umständen über die Lebensdauer des Lagermoduls erhalten. Im Falle der Notwendigkeit eines Auswechselns oder eines Erneuerns des Protektionsmittels, ist dies auf unkomplizierte Weise möglich, und verursacht somit im Wesentlichen keinen über den Materialwert hinausgehenden Aufwand.

Das Lagermodul als solches kann sowohl als ein Gleitlager, als auch als ein Wälzlager ausgeführt sein. Hierbei wiederum ist es möglich, dass die Lagerkomponenten nach Art eines Rotationslagers drehbar, oder nach Art eines Linearlagers translatorisch bewegbar zueinander gelagert sind.

Vorzugsweise umfasst das Material ein oligodynamisch wirkendes Metall. Als oligodynamisch wirkende Metalle sind beispielsweise Quecksilber, Silber, Kupfer und seine Legierungen Messing und Bronze, Zinn, Eisen, Blei und Bismut bekannt. Aus Gründen der Umweltverträglichkeit und der Wirksamkeit sind hierunter Silber und Kupfer als vorteilhaft zu erachten. Aus ökonomischen Gesichtspunkten heraus, ist hiervon Kupfer zu bevorzugen. Die oligodynamische Wirkung der genannten Metalle beruht vor allem auf der Abgabe ihrer biozid wirkenden Kationen, welche die Wirkbestandteile der jeweiligen Metalle darstellen.

Das Protektionsmittel umfasst das oligodynamische Material beispielsweise derart, dass das Protektionsmittel ganz oder teilweise mit dem Material beschichtet ist. Alternativ hierzu ist das Material beispielsweise in dem Protektionsmittel eingelagert. Vorzugsweise ist das Protektionsmittel aber aus dem Material gefertigt. Dies stellt eine fertigungstechnisch besonders einfach zu realisierende Variante dar.

Wie eingangs erwähnt, kann es sich bei dem Lagermodul sowohl um ein Gleitlager als auch um ein Wälzlager handeln. Welche der genannten Varianten gewählt wird, hängt im Wesentlichen von den Erfordernissen der konkreten Anwendungsumgebung des Lagermoduls ab. Hierbei sind Faktoren, welche die Betriebsverhältnisse kennzeichnen, wie z.B. eine Lagerbelastung, eine Betriebstemperatur, ein zur Verfügung stehender Einbauraum oder eine Geschwindigkeit, mit welcher die Lagerkomponenten zueinander bewegbar sein sollen, zu nennen. Bei gebräuchlichen Unterwasseranwendungen des Antriebsmoduls, wie z.B. im Einsatz bei einer Unterwasserturbine, ist es häufig erforderlich, eine schnelle Bewegbarkeit der Lagerkomponenten zueinander zu realisieren. Dies kann auf effektive Weise insbesondere mittels eines Wälzlagers realisiert werden.

Vorzugsweise sind die Lagerkomponenten mittels einer Anzahl von Wälzkörpern relativ zueinander bewegbar gelagert. Als Wälzkörper können beispielsweise Kugeln, Zylinderrollen, Nadelrollen, Kegelrollen und Tonnenrollen eingesetzt werden.

In einer vorteilhaften Ausgestaltungsvariante ist ein Käfig vorgesehen, in dem die Wälzkörper aufgenommen sind. Ein Käfig führt in der Regel die Wälzkörper und hält sie in gleichmäßigem Abstand zueinander und verhindert dadurch, dass die Wälzkörper sich gegenseitig berühren. Der Käfig kann beispielsweise aus einem Stahl, insbesondere einem Edelstahl gefertigt sein. Alternativ kann der Käfig beispielsweise auch aus einem geeigneten Kunststoff oder aus Messing gefertigt sein.

Vorteilhafterweise ist das Protektionsmittel an der oder jeder Lagerkomponente befestigt. Das Protektionsmittel kann hierzu beispielsweise mittels einer "unlösbaren" Befestigung, wie beispielsweise einer Verklebung oder Verschweißung angebracht werden. Um ein unkompliziertes Auswechseln des Protektionsmittels zu ermöglichen, ist es aber zweckmäßig, eine lösbare Verbindung zwischen der entsprechenden Lagerkomponente und dem Protektionsmittel herzustellen, beispielsweise mittels einer Verschraubung oder Verclipsung. Durch die Befestigung des Protektionsmittels an der Lagerkomponente ist es möglich, das Lagermodul mit dem Protektionsmittel als vormontierte Baueinheit in einer kompakten Bauweise zur Verfügung zu stellen.

In einer weiter vorteilhaften Ausgestaltungsvariante ist das Protektionsmittel an dem Käfig befestigt. Diese Ausgestaltungsvariante kann alternativ oder zusätzlich zu der Befestigung des Protektionsmittels an einer Lagerkomponente vorgesehen sein. Diese Anbringung ist besonders vorteilhaft, da insbesondere durch eine Laufbewegung der Wälzkörper die Strömungsverhältnisse im Bereich der Käfige lokal beeinflusst werden können, derart dass eine wirkungsvolle Durchspülung des Lagermoduls insbesondere mit dem mit dem Wirkbestandteil angereicherten Wasser weiter begünstigt wird. Dies trägt letztlich zu einer weiteren Verbesserung des Schutzes vor Fouling-Bewuchs bei.

Vorteilhafterweise umfasst das Protektionsmittel für eine Befestigung ein Befestigungsmittel. Das Befestigungsmittel ist insbesondere ein integraler Bestandteil des Protektionsmittels und ist für eine Befestigung an dem Käfig und/oder einer Lagerkomponente ausgestaltet. Über das Befestigungsmittel kann das Protektionsmittel auf einfache Weise und insbesondere reversibel an dem Käfig und/oder der entsprechenden Lagerkomponente angebracht werden. Durch die reversible Anbringung des Protektionsmittels wird ein unter Umständen notwendiges Auswechseln oder Erneuern des Protektionsmittels erheblich vereinfacht und erleichtert. Das Befestigungsmittel ist hierzu beispielsweise als ein Steckkopf ausgeführt, welches einfach in einen entsprechenden Steckplatz des Käfigs und/oder der Lagerkomponente einhängbar ist. Das Befestigungsmittel kann ebenso als eine Klammer oder als ein Clipselement ausgeführt sein.

In einer vorteilhaften Ausführungsform ist das Befestigungsmittel als ein Schraubmittel ausgeführt. Das Befestigungsmittel ist hier insbesondere schaftartig ausgeführt und besitzt ein Schraubgewinde. Das Protektionsmittel kann hierdurch über das Befestigungsmittel einfach in die entsprechende Befestigungsfläche des Käfigs und/oder der Lagerkomponente eingeschraubt werden. Die Befestigung mittels einer Verschraubung eignet sich für den vorgesehenen Verwendungszweck auf besondere Weise, da hierdurch zum einen ein fester Halt des Protektionsmittels gewährleistet werden kann, und zum anderen die Verschraubung ohne großen Aufwand wieder gelöst werden kann, beispielsweise Falls ein Auswechseln des entsprechenden Protektionsmittels notwendig wird.

Vorzugsweise ist zwischen dem Protektionsmittel und der oder jeder Lagerkomponente und/oder dem Käfig ein Trennmittel angeordnet. Das Trennmittel ist insbesondere dafür vorgesehen, dass ein direkter Kontakt des Protektionsmittels zu dem Käfig und/oder der Lagerkomponente vermieden wird, insbesondere um eine Kontaktkorrosion zu vermeiden. Eine Kontaktkorrosion ist beispielsweise bei einer entsprechenden Materialpaarung der sich kontaktierenden Bauelemente möglich. Eine Kontaktkorrosion ist beispielsweise dann zu erwarten, wenn alle beteiligten Bauteile, also das Protektionsmittel auf der einen Seite und der Käfig und/oder die entsprechende Lagerkomponente auf der anderen Seite, aus einem Metall gefertigt sind, die entsprechenden Metalle gemäß der elektrochemischen Spannungsreihe aber nicht im selben Maße edel sind. Gemäß der elektrochemischen Spannungsreihe können Metalle in "edle" und "unedle" unterteilt werden, wobei ein unedles Metall im Kontakt zu einem edleren Metall korrodiert. Durch das Trennmittel wird dieser Effekt vermieden. Dazu ist das Trennmittel insbesondere aus einem nichtleitenden Material, wie beispielsweise einem Kunststoff gefertigt.

Zweckmäßigerweise sind die Lagerkomponenten als ein sich in eine Umfangsrichtung erstreckender Außenring und ein entsprechender Innenring ausgeführt. Die Lagerkomponenten sind hierbei zueinander in Umgangsrichtung drehbar gelagert. Der Innenring und der Außenring, welche im Folgenden gelegentlich auch als Lagerringe bezeichnet werden, können hierzu beispielsweise mittels einer Anzahl von Wälzkörpern gelagert sein. Alternativ ist es ebenso möglich, dass die Lagerringe "gleitend" zueinander bewegbar sind. Für eine möglichst verschleißarme Gleitbewegung wird beispielsweise ein geeigneter Gleitbelag auf den oder jeden Lagerring aufgebracht.

In einer weiter vorteilhaften Ausgestaltungsvariante ist das Protektionsmittel ringförmig ausgeführt. Durch das ringförmige Protektionsmittel ist es möglich, eine sehr gleichmäßige Verteilung des Wirkbestandteils in der Umgebung des Lagermoduls zu erreichen, so dass der Schutz vor einem Fouling-Bewuchs weiter verbessert werden kann. Für eine Befestigung des Protektionsmittels kann beispielsweise eine entsprechende Einclipsnut in dem oder jedem Lagerring vorgesehen sein. Durch die Vorgabe einer Einclipsnut ist es auf besonders einfache Weise möglich, das ringförmige Protektionsmittel an einem der Lagerringe oder vorzugsweise an beiden Lagerringen durch ein einfaches Einclipsen zu befestigen.

### Kurze Beschreibung der Zeichnung

Ausführungsbeispiele der Erfindung werden anhand einer Zeichnung näher erläutert. Dabei zeigen:
- Fig. 1:: ein Lagermodul gemäß einer ersten Ausführungsform,
- Fig. 2:: ein Lagermodul gemäß einer zweiten Ausführungsform,
- Fig. 3:: ein Lagermodul gemäß einer dritten Ausführungsform,
- Fig. 4:: ein Lagermodul gemäß einer vierten Ausführungsform,
- Fig. 5:: ein Lagermodul gemäß einer fünften Ausführungsform,
- Fig. 6:: ein Lagermodul gemäß einer sechsten Ausführungsform,
- Fig.7:: ein Lagermodul gemäß einer siebten Ausführungsform,
- Fig. 8:: eine Detailansicht eines Protektionsmittels,
- Fig. 9: ein Lagermodul gemäß einer achten Ausführungsform, und
- Fig. 10: ein Lagermodul gemäß einer neunten Ausführungsform..

### Ausführliche Beschreibung der Zeichnung

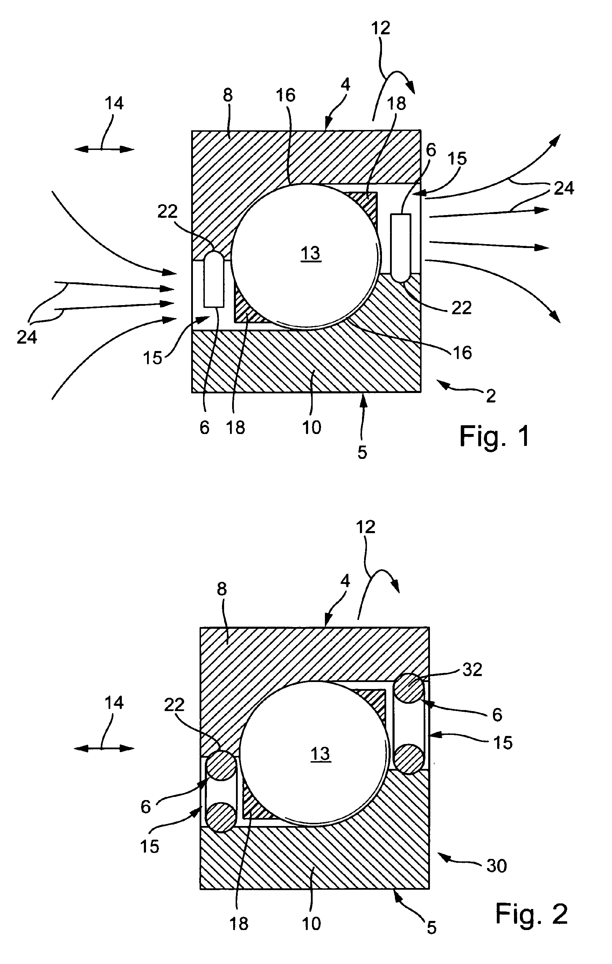

Aus Fig. 1 ist ein Lagermodul 2 gemäß einer ersten Ausführungsform in einer Querschnittsdarstellung ersichtlich. Das Lagermodul 2 ist insbesondere für einen Einsatz vorwiegend unter Wasser, beispielsweise unter Meerwasser, vorgesehen. Hierbei findet das Lagermodul 2 beispielsweise in Unterwasserturbinen, Unterwasserantrieben, wie z.B. Schiffsantrieben, oder bei Schiffsrudern Anwendung.

Gemäß der Darstellung umfasst das Lagermodul 2 eine erste und eine zweite Lagerkomponente 4,5, sowie ein Protektionsmittel 6. Die Lagerkomponenten 4,5 sind als ein Außenring 8 und als ein Innenring 10 gegeben. Im Folgenden werden der Außenring 8 und der Innenring 10 gelegentlich auch als Lagerringe 8,10 bezeichnet. Die Lagerringe 8,10 erstrecken sich jeweils entlang einer Umfangsrichtung 12 und sind mittels einer Anzahl von Wälzkörpern 13 zueinander bewegbar gelagert.

Der Außenring 8 und der Innenring 10 sind gegeneinander nicht abgedichtet. Stattdessen ist in einer Durchlassrichtung 14 des Lagermoduls 2 beidseitig ein Öffnungsschlitz 15 vorgesehen. Durch den Öffnungsschlitz 15 kann das Umgebungsmedium des Lagermoduls 2, welches hier durch das Umgebungswasser gegeben ist, das Lagermodul 2 durchströmen.

Die Wälzkörper 13, von denen aus der Querschnittsdarstellung ein einzelner hervorgeht, wälzen sich im Betrieb des Lagermoduls 2 auf einer jeweiligen Lauffläche 16 des Innenrings 10 sowie des Außenrings 8 ab. Im Einsatz ist einer der Lagerringe 8, 10 insbesondere feststehend und der entsprechend andere Lagerring 10,8 dreht sich um eine zentrale Rotationsachse des Lagermoduls 2, in Umfangsrichtung 12. Die Wälzkörper 13 sind zwischen dem Innenring 10 und dem Außenring 8 angeordnet

Die Wälzkörper 13 sind in jeweils in hier nicht sichtbare Taschen eines Käfigs 18 aufgenommen, derart dass die Wälzkörper 13 in gleichmäßigem Abstand zueinander gehalten werden. Dadurch wird verhindert, dass die Wälzkörper 13 sich gegenseitig im Umlauf behindern.

Das im Querschnitt zapfenförmig Protektionsmittel 6 ist aus Kupfer gefertigt. Um eine gleichmäßige Verteilung der biozid wirkenden Kupferkationen zu erreichen, ist eine Vielzahl von Protektionsmitteln 6 entlang der Umfangsrichtung 12 an dem Lagermodul 2 befestigt. Alternativ hierzu kann es aber auch vorgesehen sein, dass das Protektionsmittel 6 in Umfangsrichtung 12 ringförmig verlaufend ausgeführt ist. Das Protektionsmittel 6 ist an dem Außenring 8, dem Innenring 10 und dem Käfig 18 befestigt. Hierbei ist das Protektionsmittel 6 bezüglich einer Richtung quer zur Durchlassrichtung 14 jeweils nur auf einer Seite des Außenrings 8 und des Innenrings 10 angeordnet. In der Darstellung ist das Protektionsmittel 6 an dem Innenring 10 bzgl. der Richtung quer zur Durchlassrichtung 14 "rechts" von dem Wälzkörper 13 angeordnet, während es an dem Außenring 8 "links" davon angeordnet ist, wodurch sich insgesamt eine beidseitige Anordnung des Protektionsmittels 6 ergibt. Für eine Befestigung des Protektionsmittels 6 besitzen beide Lagerringe 8,10 jeweils eine entsprechende Einclipsnut 22, in welche das zapfenförmige Protektionsmittel 6 eingeclipst ist. Durch die Einclipsung des Protektionsmittels 6 in die jeweilige Einclipsnut 22 ist es beispielsweise möglich, das Protektionsmittel 6 bei Bedarf ohne größeren Aufwand auszutauschen oder zu erneuern. Alternativ ist es selbstverständlich auch möglich, das Protektionsmittel 6 mittels einer Klebung an den Lagerringen 8,10 zu befestigen.

In der vorgesehenen Verwendungsumgebung des Lagermoduls 2 unter Wasser besteht die Gefahr eines unerwünschten Bewachsens des Lagermoduls 2 durch Unterwasserorganismen, wie z.B. Algen oder Seepocken. Dies wird auch als ein Fouling bezeichnet. Ein derartiges Fouling beeinträchtigt die Funktionsfähigkeit und die Betriebstüchtigkeit des Lagermoduls 2 mitunter erheblich. Besonders eine Anlagerung der Laufflächen 16 des Lagermoduls 2 mit kalkabsondernden Organismen, wie zum Beispiel mit Seepocken, birgt die Gefahr einer massiven Schädigung der Laufflächen 16 durch die relativ harten Kalkablagerungen. Im Betrieb des Lagermoduls 2 werden diese Kalkablagerungen von den auf der Lauffläche 16 des Innenrings 10 und des Außenrings 8 laufenden Wälzkörper 13 "überrollt", so dass mitunter scharfkantige Bruchteile entstehen, welche die Laufflächen 16 schädigen können. Dies kann im Endeffekt zu einem Totalausfall des Lagermoduls 2 führen.

Um einen Schutz vor einem derartigen Fouling-Bewuchs zu gewährleisten, ist das Protektionsmittel 6 aus einem oligodynamisch wirkenden Metall, hier aus Kupfer, gefertigt. Unter einer oligodynamischen Wirkung wird im Folgenden eine auf lebende Unterwasserorganismen, wie insbesondere Algen, Pilze und Seepocken schädigende oder abtötende Wirkung verstanden. Die Wirkung lässt sich somit als biozid beschreiben. Die oligodynamische Wirkung des Kupfers geht im Wesentlichen von den Kupferkationen aus, welche von dem Kupfer in das Umgebungsmedium, also hier in das Wasser, abgegeben wird. Das mit den biozid wirkenden Kupferkationen angereicherte Wasser durchspült das Lagermodul 2. Dieses "Durchspülen" wird in der Darstellung durch die exemplarisch eingezeichneten Strömungslinien 24 illustriert. Da das Protektionsmittel 6, wie weiter oben dargelegt, bezüglich einer Richtung quer zur Durchlassrichtung 14 beidseitig angeordnet ist, wird eine Durchspülung des Lagermoduls 2 mit dem mit den Kupferkationen angereicherten Wasser unabhängig von der momentanen Strömungsrichtung des Wassers sicher gestellt. Die biozide Wirkung, durch welche ein Fouling-Bewuchs der Flächen des Lagermoduls 2 verhindert wird, ist insgesamt nicht von einem direkten Kontakt des Protektionsmittels 2 mit der vor Bewuchs zu schützenden Fläche abhängig.

Durch die im Wesentlichen beständige Durchspülung des Lagermoduls 2 mit dem mit den Kupferkationen angereicherten Wasser ist es möglich, einen wirkungsvollen und dauerhaften Schutz gegen einen Fouling-Bewuchs der Komponenten des Lagermoduls 2, wie z.B. des Käfigs 18, der Lagerkomponenten 4,5, der Wälzkörper 13 und insbesondere der Laufflächen 16 zu erreichen. Insgesamt ist es möglich, ohne großen konstruktiven Aufwand, mit einem geringen Arbeitsaufwand eine wirksame Maßnahme gegen einen Fouling-Bewuchs zu realisieren.

In Fig. 2 ist ein Querschnitt eines Lagermoduls 30 in einer zweiten Ausgestaltungsvariante dargestellt. Der Aufbau des Lagermoduls 30 stimmt im Wesentlichen mit dem Aufbau des in Fig. 1 dargestellten Lagermoduls 2 überein. Das Protektionsmittel 6 ist hier ebenso sowohl an dem Außenring 8, als auch an dem Innenring 10 befestigt. Im Gegensatz zu Fig. 1 ist das im Querschnitt runde Protektionsmittel 6 hier aber nicht zapfenförmig, sondern als ein sich in Umfangsrichtung 12 erstreckender Ring 32 ausgeführt. Der entsprechende Ring 32 ist bezüglich einer Richtung quer zur Durchlassrichtung 14 jeweils auf beiden Seiten des Außenrings 8 und des Innenrings 10 angeordnet. Der in Umfangsrichtung 12 verlaufende Ring 32 ist hierzu in eine entsprechende Einclipsnut 22 des Innenrings 10 und des Außenrings 8 eingeclipst.

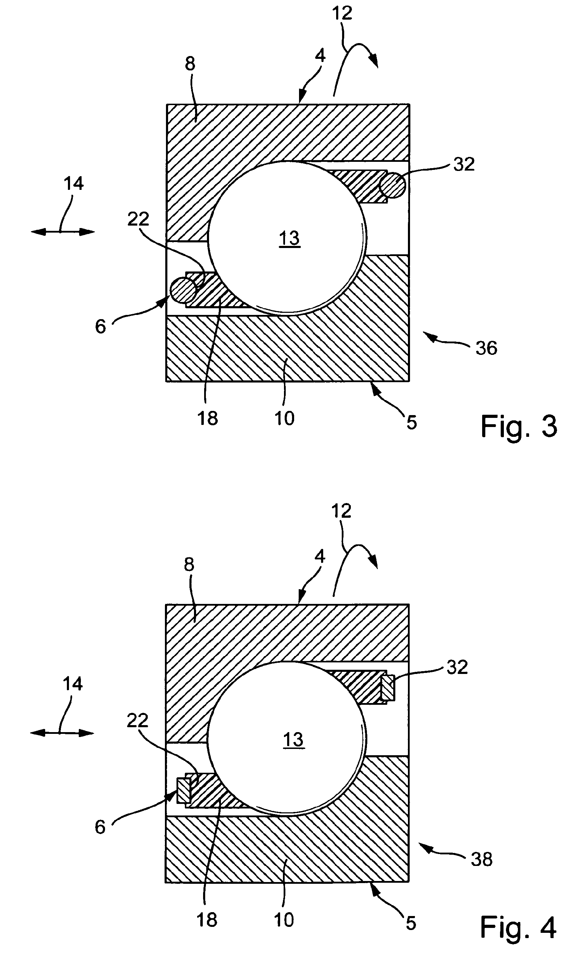

Fig. 3 zeigt einen Querschnitt eines Lagermoduls 36 in einer dritten Ausgestaltungsvariante. Anders als in den Fig. 1 und Fig. 2, ist hier das Protektionsmittel 6 nicht an den Lagerkomponenten 4,5 befestigt, sondern an dem Käfig 18. Das Protektionsmittel 6 ist hier wiederum als ein in Umfangsrichtung 12 verlaufender Ring 32 ausgeführt, welcher in eine entsprechende Einclipsnut 22 des Käfigs 18 eingeclipst ist.

Fig. 4 zeigt ein Lagermodul 38 in einer vierten Ausgestaltungsvariante. Wie in Fig. 3 ist das Protektionsmittel 6 auch hier an dem Käfig 18 befestigt. Das Protektionsmittel 6 ist hier aber nicht als ein Ring 32, sondern quaderförmig ausgeführt.

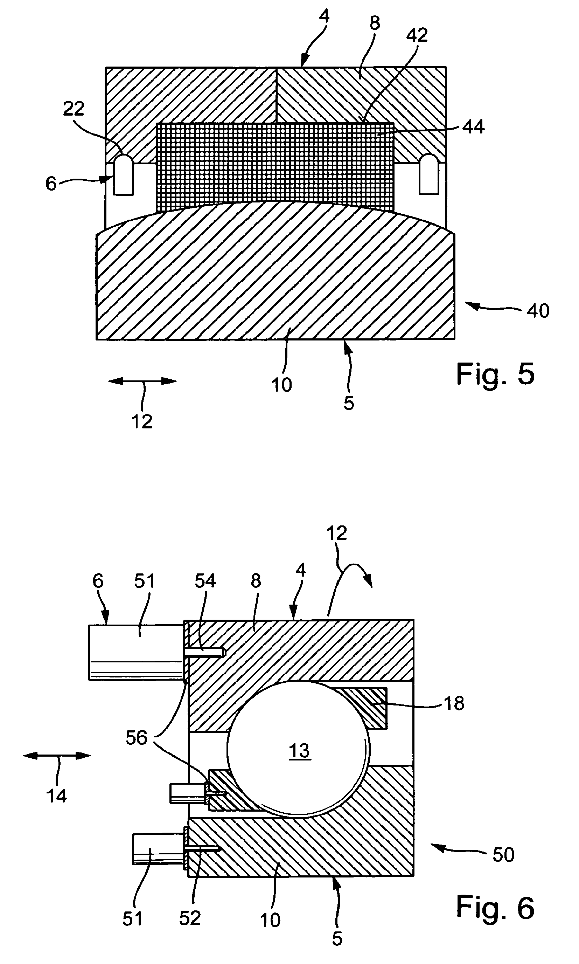

Fig. 5 zeigt einen längs zur Umfangsrichtung 12 verlaufenden Querschnitt eines Lagermoduls 40 in einer fünften Ausgestaltungsvariante. Anders als in den bisher beschriebenen Ausgestaltungsformen, ist das Lagermodul 40 nicht als ein Wälzlager ausgeführt, sondern als ein Gleitlager. Im Betrieb des Lagermoduls 40 gleitet einer der Lagerringe 8, 10 auf dem entsprechend anderen, insbesondere feststehenden Lagerring 10, 8 und dreht sich hierbei um eine zentrale Rotationsachse des Lagermoduls 2 in Umfangsrichtung 12. Die Gleitbewegung der Ringe 8,10 geschieht hierbei über eine Gleitfläche 42, auf welcher für eine möglichst verschleißarme Gleitbewegung ein geeigneter Gleitbelag 44 aufgebracht ist.

Das zapfenförmig ausgeführte Protektionsmittel 6 ist hier am Außenring 8 angebracht. Durch das Protektionsmittel 6 soll insbesondere ein Fouling-Bewuchs der Gleitfläche 42 verhindert werden.

Fig. 6 zeigt ein Lagermodul 50 in einer sechsten Ausgestaltungsvariante. Der Aufbau des Lagermoduls 50 ist im Wesentlichen der gleiche wie der in den vorbeschriebenen Ausgestaltungsvarianten, wobei es sich hier wiederum um ein Wälzlager handelt.

Anders als für die vorherigen Ausführungsbeispiele beschrieben, ist das Protektionsmittel 6 als ein zylindrischer Körper 51, welcher aus dem oligodynamisch wirkenden Kupfer gefertigt ist, ausgeführt. Um eine gleichmäßige Verteilung der biozid wirkenden Kupferkationen zu erreichen, ist eine Vielzahl von Protektionsmitteln 6 an dem Lagermodul 2 befestigt. Das sichtbare Protektionsmittel 6 ist hierbei an dem Außenring 8, dem Innenring 10 und dem Käfig 18 befestigt. Für eine Befestigung umfasst das Protektionsmittel 6 ein Befestigungsmittel 52, welches hier als ein Schraubmittel 54 ausgeführt ist. Das Schraubmittel 54 ist schaftartig ausgeführt und besitzt ein Schraubgewinde. Über das Schraubmittel 54 des Protektionsmittels 6 ist es auf besonders einfache Weise möglich, das Protektionsmittel 6 an der entsprechenden Befestigungsfläche des Käfigs 18, sowie des Innenrings 10 und des Außenrings 8 zu befestigen. Die Befestigung mittels einer Verschraubung eignet sich besonders, da hierdurch zum einen ein fester Halt des Protektionsmittels 6 gewährleistet wird, und zum anderen die Verschraubung ohne großen Aufwand wieder gelöst werden kann, beispielsweise um das entsprechende Protektionsmittel 6 auszutauschen oder zu erneuern.

Zwischen dem Käfig 18 und den Lagerringen 10,8 einerseits und dem jeweiligen daran befestigten Protektionsmittel 6 andererseits ist jeweils Trennmittel 56 angeordnet. Das Trennmittel 56 ist hier als eine aus einem geeigneten Kunststoff gefertigte Unterlegscheibe ausgeführt.

Das Trennmittel 56 ist insbesondere dafür vorgesehen, einen direkten Kontakt des Protektionsmittels 6 zu bei dem Käfig 18 und zu den Lagerringen 8,10 zu vermeiden, insbesondere um eine Kontaktkorrosion zu unterbinden.

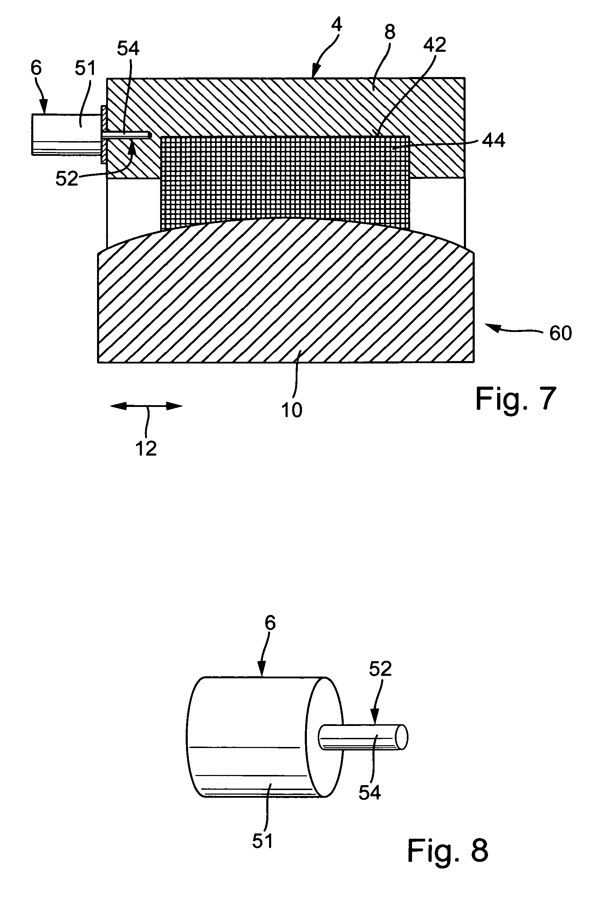

In Fig. 7 ist ein Lagermodul 60 in einer siebten Ausführungsform zu sehen. Das Lagermodul 60 ist hier als ein Gleitlager ausgeführt. Das sichtbare Protektionsmittel 6 ist über sein Schraubmittel 54 an dem Außenring 8 befestigt.

In Fig. 8 ist eine Detailansicht eines Protektionsmittels 6 gemäß Fig. 6 und Fig. 7 schematisch dargestellt. Aus der Detailansicht geht gut erkennbar der zylindrische Grundkörper 51 sowie das Befestigungsmittel 52 des Protektionsmittels 6 hervor. Wie zu erkennen ist, ergibt sich hierdurch insgesamt eine sehr kompakte Form des Protektionsmittels 6, was eine Montage des Lagermoduls 2 erheblich erleichtert.

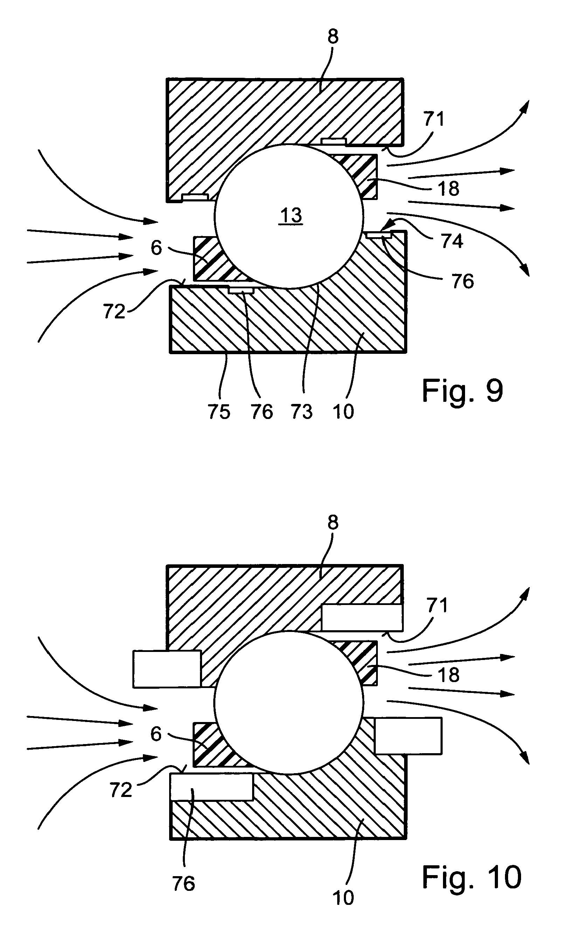

Fig. 9 zeigt ein Lagermodul 70 in einer achten Ausführungsform, das als Lagerkomponenten einen Außenring 8 und einen Innenring 10 sowie einen Käfig 18 umfasst, wobei der Käfig 18 Wälzkörper 13 führt, von denen nur einer dargestellt ist.

Der Käfig 18 weist ein Protektionsmittel 6 auf; insbesondere ist das Protektionsmittel 6 an der Oberfläche des Korpus des Käfigs 18 angeordnet und als insbesondere metallische Beschichtung, speziell aus Kupfer, der Oberfläche des Korpus des Käfigs 18 ausgebildet. Weiter sind die Wälzkörper 13 aus einem elektrisch nicht-leitenden Material, speziell auf Keramik, ausgebildet. Die nicht-leitenden Wälzkörper 13 verhindern einen Kontakt zwischen der Kupfer-Beschichtung des Korpus des Käfigs 18 mit dem Material des Korpus der beiden Lagerringe 8, 10, so dass keine Kontaktkorrosion auftreten kann, wenn das chemisch edle Kupfer mit dem chemisch weniger edlen Material der Lagerringe 8, 10, beispielsweise Wälzlagerstahl, elektrisch leitend verbunden ist. Um diese Kontaktkorrosion im Betrieb des Lagermoduls 70 zu verhindern, ist der Käfig 18 mittels der Wälzkörper 13 geführt, so dass ein Kontakt mit einem der Lagerringe 8, 10 oder einem Bord vermeidbar ist.

Die Wälzkörper 13 können auch aus Glas oder Kunststoff anstelle von Keramik hergestellt sein. Ebenso kann die Beschichtung des Korpus des Käfigs 18 anstelle von Kupfer auch aus einem anderen bioziden Material, insbesondere auch aus einem anderen biozid wirkenden Metall bestehen, wie beispielsweise Silber oder Bronze. Die Beschichtung kann das Korpus des Käfigs 18 vollständig überdecken oder nur abschnittsweise ausgebildet sein; insbesondere kann die Beschichtung an solchen Abschnitten des Korpus des Käfigs 18 vorgesehen sein, die bei einer Führung des Käfigs 18 durch einen der beiden Lagerringe 8, 10 mit dem Material dieses Lagerrings nicht in Kontakt kommt, so dass das Korpus des Käfigs 18 in diesem Fall die Kontaktkorrosion verhindert und Wälzkörper 13 vorgesehen sein können, die elektrisch leitend ausgebildet sind. Speziell kann die biozide wirkenden Beschichtung aus einem Metall wie Kupfer oder Silber abschnittsweise an den auf die innere Mantelfläche 71 des Außenrings 8 und bzw. oder auf die äußere Mantelfläche 72 des Innenrings 10 weisenden Flächenabschnitten des Korpus des Käfigs 18 vorgesehen sein.

Hinsichtlich des Materials der biozid wirkenden Beschichtung des Korpus des Käfigs 13 kann auch vorgesehen sein, dass die Beschichtung aus einem Material wie einem Kunststoff besteht, in das die biozid wirkenden Metalle als Partikel eingelassen sind.

An den beiden den Innenraum des Lagers bildenden Mantelflächen 71, 72 der beiden Lagerringe 8, 10 ist seitlich einer jeweiligen Laufbahn 73 ein Korrosionsschutz 74 vorgesehen, der eine Korrosion, speziell eine Lochfraßkorrosion des chemisch unedlen Materials der beiden Lagerringe 8, 10, insbesondere des Wälzlagerstahls, unterdrücken soll. Der Korrosionsschutz 74 umfasst eine passive Korrosionsbeschichtung 75 aus einem Polymer-Lack, der die innere Mantelflächen 71, 72 abseits der Laufbahn 73 sowie die beiden Stirnflächen sowie die bezogen auf das Lagerinnere äußeren Mantelflächen der beiden Lagerringe 8, 10 überdeckt.

Der Korrosionsschutz 74 umfasst weiter einen anodischen Korrosionsschutz 76, insbesondere eine Fremdstromanode, die benachbart zu der Laufbahn 73 zwischen der Laufbahn 73 und der passiven Korrosionsbeschichtung 75 angeordnet ist. Da die Wirkung der Fremdstromanode exponentiell mit der Entfernung zu der Anode abnimmt, ist der anodische Korrosionsschutz 76 näher an der Laufbahn 73 angeordnet als die passive Korrosionsbeschichtung 75. Aufgrund der räumlichen Nähe des anodischen Korrosionsschutzes 76, speziell der Fremdstromanode, zu der Laufbahn 73, kann die Anode eine nur geringe Leistung erfordern und dennoch einen ausreichenden Schutz für die Laufbahn 73 bieten. Die Konzentration des anodischen Korrosionsschutzes, speziell der Fremdstromanode, auf den unmittelbar der Laufbahn 73 benachbarten Abschnitt der jeweiligen inneren Mantelfläche 71, 72 unterdrückt außerdem das Auftreten von Kriechströmen.

Die passive Korrosionsbeschichtung 75 reduziert die der möglichen Korrosion ausgesetzte Fläche des Lagerinneren auf den unmittelbar an die Laufbahn 73 angrenzenden Bereich. In diesem Bereich, in dem die passive Korrosionsbeschichtung 75 einer im Betrieb sehr starken mechanischen Belastung durch die Überrollung durch die Wälzkörper 13 ausgesetzt ist, wird der Schutz gegen Korrosion durch den anodischen Korrosionsschutz 76, speziell die Fremdstromanode, übernommen, so dass insgesamt für den gesamten Lagerinnenraum die Korrosion deutlich unterdrückt wird.

Die in Fig. 10 dargestellte neunte Ausführungsform unterscheidet sich nur wenig von der in Fig. 9 dargestellten achten Ausführungsform, so dass gleiche oder vergleichbare Teile der achten und der neunten Ausführungsform mit den gleichen Bezugszeichen versehen sind. Im folgenden werden die Unterschiede zwischen der neunten Ausführungsform und der achten Ausführungsform erläutert.

Die in Fig. 10 dargestellten Lagerringe 8, 10 weisen an den inneren Mantelflächen 71, 72 nur einen anodischen Korrosionsschutz 76 auf, der durch eine Opferelektrode aus einem bezüglich des Materials der beiden Lagerringe 8, 10 (vorliegend Wälzkörperstahl) chemisch unedlen Material wie Aluminium, Magnesium oder Zink besteht. Der anodische Korrosionsschutz 76 ist als Einlage ausgebildet, die möglichst nahe an die Laufbahn 73 heranreicht. Die Stirnflächen der beiden Lagerringe 8, 10 sowie die äußeren Mantelflächen der beiden Lagerringe 8, 10 sind von einer passiven Korrosionsbeschichtung umgeben, die jedoch nicht in das Lagerinnere hineinreicht.

### Bezugszeichenliste

- 2: Lagermodul
- 4: Lagerkomponente
- 5: Lagerkomponente
- 6: Protektionsmittel
- 8: Außenring
- 10: Innenring
- 12: Umfangsrichtung
- 13: Wälzkörper
- 14: Durchlassrichtung
- 15: Öffnungsschlitz
- 16: Lauffläche
- 18: Käfig
- 22: Einclipsnut
- 24: Strömungslinien
- 30: Lagermodul
- 32: Ring
- 36: Lagermodul
- 38: Lagermodul
- 40: Lagermodul
- 42: Gleitfläche
- 44: Gleitbelag
- 50: Lagermodul
- 51: zylinderischer Körper
- 52: Befestigungsmittel
- 54: Schraubmittel
- 56: Trennmittel
- 60: Lagermodul
- 70: Lagermodul
- 71: innere Mantelfläche
- 72: äußere Mantelfläche
- 73: Laufbahn
- 74: Korrosionsschutz
- 75: Korrosionsbeschichtung
- 76: anodischer Korrosionsschutz

## Patentansprüche

1. Lagermodul (2, 30, 36, 38, 40, 50, 60, 70) mit einer ersten und einer zweiten Lagerkomponente (4, 5), die relativ zueinander bewegbar gelagert sind,
wobei die Lagerkomponenten (4, 5) als ein sich in eine Umfangsrichtung (12) erstreckender Außenring (8) und ein entsprechender Innenring (10), ausgeführt sind,
**dadurch gekennzeichnet,**
**dass** an einem der beiden Lagerringe (8, 10) eine Laufbahn (73) vorgesehen ist, seitlich von der ein Korrosionsschutz (74) vorgesehen ist, und
**dass** das Lagermodul (2, 30, 36, 38, 40, 50, 60, 70) von Wasser geschmiert ist.

2. Lagermodul (70) nach Anspruch 1, **dadurch gekennzeichnet, dass** der Korrosionsschutz (74) eine passive Korrosionsbeschichtung (75), insbesondere als Schicht aus einem Polymer-Lack, umfasst.

3. Lagermodul (70) nach Anspruch 1 oder 2, **dadurch gekennzeichnet, dass** der Korrosionsschutz (74) einen anodischen Korrosionsschutz (76), insbesondere eine Opferanode oder eine Fremdstromanode, umfasst.

4. Lagermodul (70) nach Anspruch 2 und 3, **dadurch gekennzeichnet, dass** der anodische Korrosionsschutz (76) in unmittelbarer Nähe der Laufbahn (73) vorgesehen ist, und dass die passive Korrosionsbeschichtung (75) in einem größeren Abstand von der Laufbahn (73) vorgesehen ist.

5. Lagermodul (2, 30, 36, 38, 40, 50, 60, 70) nach einem der Ansprüche 1 bis 4 **dadurch gekennzeichnet, dass** ein separates Protektionsmittel (6) vorgesehen ist, welches ein oligodynamisch wirkendes Material umfasst, wobei das mit dem oligodynamisch wirkenden Material angereicherte Wasser das Lagermodul (2, 30, 36, 38, 40, 40, 60, 70) durchspült.

6. Lagermodul (2, 30, 36, 38, 40, 50, 60, 70) nach Anspruch 5, **dadurch gekennzeichnet, dass** das Material ein oligodynamisch wirkendes Metall umfasst.

7. Lagermodul (2, 30, 36, 38, 40, 50, 60) nach Anspruch 5 oder 6, **dadurch gekennzeichnet, dass** das Protektionsmittel (6) aus dem Material gefertigt ist.

8. Lagermodul (2, 30, 36, 38, 40, 50, 60, 70) nach einem der Ansprüche 5 bis 7, **dadurch gekennzeichnet, dass** die Lagerkomponenten (4, 5) mittels einer Anzahl von Wälzkörpern (13) relativ zueinander bewegbar gelagert sind.

9. Lagermodul (2, 30, 36, 38, 40, 50, 60, 70) nach einem der Ansprüche 1 bis 8, **dadurch gekennzeichnet, dass** ein Käfig (18) vorgesehen ist, in dem die Wälzkörper (13) aufgenommen sind.

10. Lagermodul (2, 30, 36, 38, 40, 50, 60, 70) nach einem der vorhergehenden Ansprüche, **dadurch gekennzeichnet, dass** das Protektionsmittel (6) an der oder jeder Lagerkomponente (4, 5) befestigt ist.

11. Lagermodul (2, 30, 36, 38, 40, 50, 60, 70) nach Anspruch 9 oder 10, **dadurch gekennzeichnet, dass** das Protektionsmittel (6) an dem Käfig (18) befestigt ist.

12. Lagermodul (2, 30, 36, 38, 40, 50, 60, 70) nach einem der Ansprüche 5 bis 11, **dadurch gekennzeichnet, dass** das Protektionsmittel (6) für eine Befestigung ein Befestigungsmittel (52) umfasst.

13. Lagermodul (2, 30, 36, 38, 40, 50, 60, 70) nach Anspruch 12, **dadurch gekennzeichnet, dass** das Befestigungsmittel (52) als ein Schraubmittel (54) ausgeführt ist.

14. Lagermodul (2, 30, 36, 38, 40, 50, 60, 70) nach einem der Ansprüche 5 bis 13, **dadurch gekennzeichnet, dass** zwischen dem Protektionsmittel (6) und der oder jeder Lagerkomponente (4, 5) und / oder dem Käfig (18) ein Trennmittel (56) angeordnet ist.

15. Lagermodul (2, 30, 36, 38, 40, 50, 60, 70) nach Anspruch 5 oder 6, **dadurch gekennzeichnet, dass** das Protektionsmittel (6) an der Oberfläche des Korpus des Käfigs (18) angeordnet ist.

16. Lagermodul (2, 30, 36, 38, 40, 50, 60, 70) nach Anspruch 15, **dadurch gekennzeichnet, dass** das Protektionsmittel (6) als Beschichtung der Oberfläche des Käfigs (18) ausgebildet ist.

17. Lagermodul (2, 30, 36, 38, 40, 50, 60, 70) nach Anspruch 16, **dadurch gekennzeichnet, dass** das Protektionsmittel (6) als metallische Beschichtung, insbesondere aus Kupfer, ausgebildet ist, und dass die Wälzkörper (13) aus einem elektrisch nicht-leitenden Material ausgebildet sind.

18. Lagermodul (2, 30, 36, 38, 40, 50, 60, 70) nach einem der Ansprüche 5 bis 15, **dadurch gekennzeichnet, dass** das Protektionsmittel (6) ringförmig ausgeführt ist.
